# EUROPÄISCHE PATENTSCHRIFT

(11) **EP 3 632 050 B1**
(45) Veröffentlichungstag und Bekanntmachung des Hinweises auf die Patenterteilung: **31.01.2024**
(21) Anmeldenummer: 18725828.0
(22) Anmeldetag: 17.05.2018
(51) Int. Cl.: H04L 12/42, H04L 12/40, H04L 12/46

(54) **BUSUMSETZER**
BUS CONVERTER
CONVERTISSEUR DE DONNÉES DE BUS

(30) Priorität: 24.05.2017 DE 102017208824
(43) Veröffentlichungstag der Anmeldung: 08.04.2020
(73) Patentinhaber: Wago Verwaltungsgesellschaft mbH, 32423 Minden (DE)
(72) Erfinder: QUAKERNACK, Frank, 33615 Bielefeld (DE); KIRSTE, Hans-Herbert, 32429 Minden (DE)
(74) Vertreter: Bardehle Pagenberg Partnerschaft mbB Patentanwälte Rechtsanwälte
(86) Internationale Anmeldenummer: PCT/EP2018/062971
(87) Internationale Veröffentlichungsnummer: WO 2018/215305

(56) Entgegenhaltungen:
- EP-A1- 1 049 019
- WO-A1-2013/184115
- CN-B- 102 170 430
- DE-A1- 10 304 637
- US-A1- 2004 054 829

## Beschreibung

### 1. Gebiet der Erfindung

Die Erfindung betrifft im Allgemeinen eine Vorrichtung zum Verbinden eines Feldbusses mit einem Lokalbus und im Speziellen einen Busumsetzer von Daten aus einem Datenstrom eines Feldbusses in einen Datenstrom eines Lokalbusses.

### 2. Stand der Technik

Vorrichtungen zum Verbinden zweier Bussysteme werden zumeist in Automatisierungsanlagen verwendet.

Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Derartige Teilnehmer eines Bussystems werden auch als Busteilnehmer bezeichnet. Weil auf dem Bussystem Daten ausgetauscht werden, werden die Busteilnehmer auch häufig als Datenbusteilnehmer bezeichnet. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt, wie zum Beispiel in WO 2013/1841115 A1 beschrieben. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt (*engl.* Header) oder angehängt (*engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können. Die an einen Lokalbus angeschlossenen Lokalbusteilnehmer können auch als Datenbusteilnehmer bezeichnet werden, weil diese Daten auf dem Lokalbus austauschen. Ein Datenbusteilnehmer dient dabei zum Steuern oder Überwachen eines Prozesses, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Daten für den Lokalbus um oder umgekehrt.

Ein Ringbus ist dabei eine spezialisierte Form eines Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einem Ringbus wird ein Datenpaket von einem zum anderen Datenbusteilnehmer weitergegeben. Dabei empfängt zu jeder gegebenen Zeit ein Datenbusteilnehmer von seinem vorgelagerten Datenbusteilnehmer immer nur einen Teil des Datenpakets. Wenn die in diesem Teil enthaltenen Daten vom Datenbusteilnehmer verarbeitet worden sind, wird der Teil an den nachgelagerten Datenbusteilnehmer weitergeleitet und gleichzeitig wird von dem vorgelagerten Datenbusteilnehmer ein neuer Teil des Datenpakets empfangen. Auf diese Weise passieren alle Teile des Datenpakets sequentiell alle Datenbusteilnehmer.

In den bekannten Ringbussystemen oder auch anderen Lokalbussystemen werden Busumsetzer verwendet, die die Datenströme von der Steuerung in ein lokalbuskonformes Format umsetzen. Dabei werden zumeist leistungsstarke Controller verwendet, die die Daten stammend von der Steuerung derart umsortieren, dass diese entsprechend der Reihenfolge der Datenbusteilnehmer am Lokalbus in einem lokalbuskonformen Format vorliegen. D.h. die Reihenfolge der Daten nach der Umsortierung entspricht der Reihenfolge in der die Datenbusteilnehmer am Lokalbus angeordnet sind. Durch diese Umsortierung kann in derartigen Bussystemen eine Adressierung entfallen, weil die Daten entsprechend der physikalischen Position der Datenbusteilnehmer im Lokalbus angeordnet sind. Zum Beispiel werden die Daten, die an den ersten Datenbusteilnehmer gerichtet sind, an die erste Stelle im lokalbuskonformen Format gesetzt, die Daten die, an den zweiten Datenbusteilnehmer im Lokalbus gerichtet sind, werden an die zweite Stelle im lokalbuskonformen Format gesetzt usw. Damit diese Umsetzung und insbesondere die Umsortierung ohne größere Verzögerungen stattfindet, werden in bekannten Systemen zumeist leistungsstarke, hochgetaktete Controller eingesetzt. Aber auch mit diesen leistungsstarken Controllern kann eine Verzögerung nur bis zu einem gewissen Grad minimiert werden. Leistungsstarke Controller bringen auch mehrere Nachteile mit sich, die Controller müssen zumeist aktiv gekühlt werden, haben eine hohe Leistungsaufnahme und sind kostspielig.

Die DE 103 04 637 A1 offenbart einen Koppler zur Weiterleitung von von einem Ethernet-Netzwerk empfangenen Paketen an ein lokales Ringnetzwerk, und umgekehrt.

Aufgabe der vorliegenden Erfindung ist es daher, eine Vorrichtung und ein entsprechendes Verfahren bereitzustellen, mit dem die Umsetzung von Daten von einem Feldbus in einen Lokalbus und insbesondere in einen Ringbus nahezu verzögerungsfrei geschieht und die Umsetzung ohne komplexe Hardware auskommt.

### 3. Zusammenfassung der Erfindung

Diese Aufgabe wird mit der Vorrichtung und dem Verfahren entsprechend der unabhängigen Ansprüche gelöst. Vorteilhafte Ausführungsformen sind in den Unteransprüchen beschrieben.

Dabei weist die erfindungsgemäße Vorrichtung, die auch als Busumsetzer oder Gateway bezeichnet werden kann, eine erste Einheit auf, die mit einem Feldbus verbindbar ist und die angepasst ist zum Senden und zum Empfangen von Daten über den Feldbus. Ein Feldbus kann dabei jeder Bus sein, der in einer Automatisierungsanlage eingesetzt werden kann und mit dessen Hilfe eine Verbindung zur Steuerung, beispielsweise der SPS, hergestellt werden kann. Dabei kann die Verbindung zur Steuerung auch über mehrere unterschiedliche Feldbusse hergestellt werden, die Gesamtheit der Verbindung zwischen erfindungsgemäßer erster Einheit und Steuerung soll dabei als ein Feldbus verstanden werden auch wenn diese Verbindung aus mehreren unterschiedlichen Feldbussen besteht. Die erste Einheit ist erfindungsgemäß angepasst, um mit dem Feldbus verbunden zu werden. Hierzu kann die erste Einheit eine für den Feldbus ausgelegte Schnittstelle aufweisen. Die Schnittstelle kann kabelgebunden oder kabellos eine Verbindung mit dem Feldbus herstellen. Über die Schnittstelle der ersten Einheit beziehungsweise über die erste Einheit kann ein Datenstrom von dem Feldbus empfangen werden und ein Datenstrom auf den Feldbus ausgegeben werden. Die erste Einheit kann auf Grund ihrer Konnektivität zum Feldbus auch als Feldbuscore (FBC) bezeichnet werden. Der FBC kann ausgebildet sein als eine individuelle arithmetische-logische Einheit, als Rechenkern, oder als Rechenschaltung die als digitale Logik ausgestaltet ist, die insbesondere zumindest als ein Teil eines Halbleiterchips ausgebildet ist. Der FBC kann in einem anwendungsspezifischen integrierten Schaltkreis (*engl.* ASIC), oder in einer Feld programmierbaren (Logik-)Gatter-Anordnung (*engl.* FPGA), oder in einer anderen programmierbare Schaltung (*engl.* PLD), oder einer diskreten Gatter oder Transistorlogik implementiert sein.

Des Weiteren weist die erfindungsgemäße Vorrichtung auch eine zweite Einheit auf, die mit einem Lokalbus, insbesondere einem Ringbus verbindbar ist und die angepasst ist zum Senden und zum Empfangen von Daten über den Lokalbus in Form zumindest eines Datenpakets. Die Datenpakete können auch als Telegramme bezeichnet werden. Ein Datenpaket weist beispielsweise Header, Payload und vorteilhafterweise eine Prüfsumme auf. Ein Datenpaket ist vorteilhafterweise ein Kommunikationsdatenpaket oder ein Prozessdatenpaket.

Ein Kommunikationsdatenpaket enthält keine Prozessdaten. Vorteilhafterweise enthält ein Kommunikationsdatenpaket Daten insbesondere zum Programmieren und/oder zum Steuern und/oder zum Überwachen und/oder zum Identifizieren zumindest eines Datenbusteilnehmers. Vorteilhafterweise weist das Kommunikationsdatenpaket eine Adresse auf, die mindestens einem Datenbusteilnehmer zugeordnet ist. Vorzugsweise ist der Datenbusteilnehmer eingerichtet, die Adresse auszuwerten.

Ein Prozessdatenpaket weist Prozessdaten auf, die von den Datenbusteilnehmern des Lokalbusses gesendet und/oder empfangen werden. Vorteilhafterweise weist das Prozessdatenpaket keine Adresse zur Übertragung der Prozessdaten an einen oder von einem Datenbusteilnehmer im Lokalbus auf. In dem Prozessdatenpaket sind die Prozessdaten beispielsweise derart angeordnet, dass Datenbusteilnehmer auf Grund der jeweiligen Position der Prozessdaten in dem Prozessdatenpaket, beispielsweise ein oder mehrere Bits innerhalb eines zugeordneten zusammenhängenden Datenblocks (1 Byte), diejenigen dem jeweiligen Datenbusteilnehmer zugehörigen Prozessdaten erkennen können. Vorteilhafterweise weist das Prozessdatenpaket eine Kennung (IDE) auf, die dem Typ des Datenpakets, also dem Prozessdatenpaket zugeordnet und durch den Datenbusteilnehmer identifizierbar ist. Die Prozessdaten können auch als Lokalbusdaten bezeichnet werden.

Die Protokolle, die auf dem Feldbus und dem Lokalbus verwendet werden, können sich unterscheiden, so dass das feldbuskonforme Format nicht ohne Umsetzung auf den Lokalbus gesendet werden kann sowie umgekehrt das lokalbuskonforme Format nicht ohne Umsetzung auf den Feldbus gesendet werden kann.

Die zweite Einheit ist erfindungsgemäß angepasst, um mit dem Lokalbus verbunden zu werden. Hierzu kann die zweite Einheit eine für den Lokalbus ausgelegte Schnittstelle aufweisen. Die Schnittstelle kann kabelgebunden oder kabellos eine Verbindung mit dem Lokalbus herstellen. Über die Schnittstelle der zweiten Einheit beziehungsweise über die zweite Einheit kann ein Datenpaket auf den Lokalbus gesendet werden und ein Datenpaket von dem Lokalbus empfangen werden. Die zweite Einheit kann auf Grund ihrer Konnektivität zum Lokalbus auch als Lokalbuscore (LBC) bezeichnet werden. Der LBC kann ausgebildet sein als eine individuelle arithmetische-logische Einheit, als Rechenkern, oder als Rechenschaltung die als digitale Logik ausgestaltet ist, die insbesondere zumindest als ein Teil eines Halbleiterchips ausgebildet ist. Der LBC kann in einem ASIC, oder in einem FPGA, oder in einer anderen PLD, oder einer diskreten Gatter oder Transistorlogik implementiert sein.

Die erfindungsgemäße Vorrichtung weist auch eine Datenverwaltungseinheit auf die mit der ersten und zweiten Einheit verbunden ist. Die Datenverwaltungseinheit kann auch als Managementeinheit (MU) bezeichnet werden, dabei kann diese entsprechend ihrer Richtung in der diese fungiert als Feldbus-Managementeinheit (FMU) oder Lokalbus-Managementeinheit (LMU) bezeichnet werden. Die Verbindung kann vorteilhafterweise ein paralleler Bus zwischen den Einheiten sein, der beispielsweise als ein 32-bit Parallelbus ausgestaltet ist. Die Datenverwaltungseinheit ist angepasst zum reihenfolgenabhängigen Transferieren von ersten Symbolen aus Daten empfangen über die erste Einheit (FBC) in die zweite Einheit (LBC). Reihenfolgenabhängig in diesem Zusammenhang meint, dass Symbole entsprechend ihrer Reihenfolge empfangen von der ersten Einheit in die zweite Einheit transferiert werden. Die Reihenfolge richtet sich also nach den ankommenden Symbolen. Beispielsweise können die Symbole empfangen über den Feldbus reihenfolgerichtig in die zweite Einheit transferiert werden. Beispielsweise wird dabei die Reihenfolge der über den Feldbus empfangenen Symbole nicht geändert oder überwiegend nicht geändert, d.h. die Symbole werden in der Reihenfolge in der sie auf dem Feldbus empfangen werden auch in die zweite Einheit transferiert. Es kann auch gesagt werden, dass keine Umsortierung stattfindet, weil die Reihenfolge der Symbole beibehalten wird. Es kann auch davon gesprochen werden, dass die Symbole eins zu eins transferiert werden. Dabei kann es sich bei den transferierten Symbolen um Prozessdaten handeln, die von der Steuerung über den Feldbus in einem feldbuskonformen Format empfangen wurden. Dabei kann das feldbuskonforme Format Prozessdaten sowie andere Daten, die den Prozessdaten vorangestellt, angefügt, oder superpositioniert sind, aufweisen. Dabei sind die anderen Daten beispielsweise busspezifisch und die Prozessdaten sind busneutral. Zumeist werden in einem feldbuskonformen Format den Prozessdaten andere Daten vorangestellt, die als Kopfteil bezeichnet werden können und die zumeist der Adressierung und Steuerung dienen. Den Prozessdaten können auch weitere andere Daten angefügt sein, die zur Fehlererkennung genutzt werden können. Die Prozessdaten sind ein Bestandteil des Nutzdatenteils (*engl.* Payload) des feldbuskonformen Formats. Die Prozessdaten sind dazu ausgelegt an den Datenbusteilnehmern des Lokalbusses eine Steuerung, Regelung oder anderweitige Reaktion hervorzurufen. Über den Feldbus können beispielsweise Feldbustelegramme empfangen werden, in denen die Prozessdaten in Form von Symbolen mit einer festen Anzahl von Bits enthalten sind und wobei die Symbole in einer ersten Reihenfolge im Feldbustelegramm angeordnet sind. Die Datenverwaltungseinheit kann dabei angepasst sein, die Symbole aus dem Feldbustelegramm in den LBC zu transferieren und zwar in eine zweite Reihenfolge. Vorzugsweise stimmen die erste und zweite

Reihenfolge der Symbole dabei überein. Die Datenverwaltungseinheit ist erfindungsgemäß angepasst, nur die Prozessdaten zu transferieren. D.h. bereits die erste Einheit ist angepasst, die Prozessdaten aus dem feldbuskonformen Format beziehungsweise dem Feldbustelegramm zu selektieren. Die Datenverwaltungseinheit kann ausgebildet sein als eine individuelle arithmetische-logische Einheit, als Rechenkern, oder als Rechenschaltung die als digitale Logik ausgestaltet ist, die insbesondere zumindest als ein Teil eines Halbleiterchips ausgebildet ist. Die Datenverwaltungseinheit kann in einem ASIC, oder in einem FPGA, oder in einer anderen PLD, oder einer diskreten Gatter oder Transistorlogik implementiert sein. Der FBC, der LBC und die Datenverwaltungseinheit können auch in einem ASIC, oder in einem FPGA, oder in einer PLD, oder in einer diskreten Gatter oder Transistorlogik gemeinsam implementiert sein. Insbesondere nach der Transferierung kann mittels einer Manipulationseinheit vorgesehen sein, die Prozessdaten durch den Lokalbusmaster gezielt zu ändern. Hierzu weist der Lokalbusmaster vorteilhafterweise Instruktionen auf, die ein Ändern der Prozessdaten bewirken.

Nachdem die ersten Symbole in den LBC transferiert wurden und ein Datenpaket erzeugt wurde, der die transferierten Symbole trägt, kann dieses Datenpaket in beispielsweise Teilen von 8 Bits, also 1 Byte, auf den Lokalbus gesendet werden und die einzelnen Teile des Datenpakets können sukzessive die Datenbusteilnehmer des Lokalbusses durchlaufen. D.h. zu jeder gegebenen Zeit empfängt ein Datenbusteilnehmer von seinem vorgelagerten Datenbusteilnehmer immer nur einen Teil des Datenpakets. Wenn die in diesem Teil enthaltenen Prozessdaten vom Datenbusteilnehmer verarbeitet worden sind, wird der Teil an den nachgelagerten Datenbusteilnehmer weitergeleitet und gleichzeitig wird von dem vorgelagerten Datenbusteilnehmer ein neuer Teil des Datenpakets empfangen. Dabei können der LBC und die Datenbusteilnehmer des Lokalbusses taktsynchron sein, so dass wenn der LBC einen neuen Teil des Datenpakets auf den Lokalbus sendet, auch die jeweiligen Datenbusteilnehmer den gerade vorliegenden Teil des Datenpakets an ihren nachgelagerten Datenbusteilnehmer senden. Der letzte Datenbusteilnehmer im Lokalbus kann dabei den ihm gerade vorliegenden Teil zurück an den LBC senden, entweder erneut durch alle Datenbusteilnehmer hindurch, oder über eine Bypassleitung. Der LBC kann dabei synchronisiert sein auf den Takt des Feldbusses, d.h. auf den Takt in dem Feldbustelegramme von dem Feldbus am FBC empfangen werden. Dabei kann der LBC angepasst sein, den Beginn des Datenpakets bereits auf dem Lokalbus auszugeben, bevor die ersten Symbole vollständig über den FBC empfangen wurden.

Mit der erfindungsgemäßen Vorrichtung wird durch das reihenfolgenabhängige Transferieren von Prozessdaten eine beschleunigte Umsetzung von einem Datenstrom von einem Feldbus auf einen Lokalbus und umgekehrt ermöglicht. Die Umsetzung aller für die Datenbusteilnehmer des Lokalbusses notwendigen Prozessdaten erfolgt dabei busneutral und mit minimaler Verzögerungszeit und minimalem Jitter. Da die Umsetzung reihenfolgenabhängig aber immer gleich geschieht, ist es vorteilhaft, dass die Datenbusteilnehmer Kenntnis über die verwendete Reihenfolge haben, wobei die Reihenfolge abweichen kann von der Reihenfolge der physikalischen Position der Datenbusteilnehmer im Lokalbus. Die Kenntnis der Reihenfolge erlaubt es, die Datenbusteilnehmer derart zu programmieren, dass sich diese die an sie gerichteten Prozessdaten aus dem Datenpaket entnehmen können, ohne dass die Prozessdaten hierzu umsortiert werden müssten. Die Programmierung der Datenbusteilnehmer kann dabei beispielsweise mit einem Kommunikationsdatenpaket geschehen, welches von der zweiten Einheit vor dem Datenpaket gesendet wird, welches die Prozessdaten trägt.

In einer bevorzugten Ausführungsform der erfindungsgemäßen Vorrichtung ist die Datenverwaltungseinheit angepasst, den ersten Symbolen zusätzliche Symbole voranzustellen und/oder anzufügen und/oder einzufügen. Es ist dabei denkbar, dass die weiteren Symbole Leersymbole sind, die verwendet werden, um der Integrität auf dem Lokalbus Rechnung zu tragen, wenn dieser beispielswiese keine Lücken in den Symbolen erlaubt oder der LBC eine gewisse Anzahl an Symbolen erwartet, diese Anzahl aber nicht der Anzahl der ersten Symbole entspricht. Die Datenverwaltungseinheit kann dabei auch angepasst sein in die ersten Symbole weitere Symbole einzufügen. Die Datenverwaltungseinheit kann auch angepasst sein nicht benötigte Symbole aus den ersten Symbolen zu entfernen.

In einer weiteren bevorzugten Ausführungsform der erfindungsgemäßen Vorrichtung speichert die Datenverwaltungseinheit die ersten Symbole zwischen. Beispielsweise kann die Datenverwaltungseinheit die transferierten Symbole in einem Speicher zwischenspeichern, um diese einem Controller für eine Auswertung zur Verfügung zu stellen. Dabei ist der Controller nicht zur Transferierung der Daten zwischen FBC und LBC eingerichtet. Durch die Zwischenspeicherung ist es beispielsweise möglich, die transferierten Symbole auch ohne die Unterbrechung der Datenströme zu überprüfen. Des Weiteren ermöglicht die Zwischenspeicherung auch, dass ein Deltaabgleich von Symbolen vor dem Senden auf dem Lokalbus und nach dem Empfangen von dem Lokalbus durchgeführt wird. Für die Zwischenspeicherung der transferierten Symbole kann die erfindungsgemäße Vorrichtung zumindest einen flüchtigen oder nicht flüchtigen Speicher aufweisen, beispielsweise einem Pseudo-Static Dynamic Random Access Memory. Dem Fachmann ist aber bekannt, dass auch jedes andere Mittel zum Vorhalten von Daten zur Zwischenspeicherung verwendet werden kann. Dabei muss das Mittel selbst nicht Teil der Vorrichtung sein, sondern kann von dieser extern vorgehalten sein oder ein Zusatzmodul sein. Die Vorrichtung und insbesondere die Datenverwaltungseinheit muss nur Zugriff auf dieses Mittel haben.

In einer weiteren bevorzugten Ausführungsform der erfindungsgemäßen Vorrichtung ist der LBC angepasst zum Erzeugen eines Datenpakets aufweisend die ersten Symbole und zum Senden des Datenpakets auf dem Lokalbus. Dabei kann das Datenpaket symbolweise auf dem Lokalbus gesendet werden. Der LBC kann dabei alle nötigen protokollspezifischen Anpassungen zum Senden des Datenpakets auf dem Lokalbus vornehmen. Der LBC ist des Weiteren angepasst ein Datenpaket von dem Lokalbus zu empfangen, wobei das empfangene Datenpaket zweite Symbole enthalten kann, die sich unterscheiden von den ersten Symbolen. Der LBC ist des Weiteren angepasst die ersten und/oder zweiten Symbole zu manipulieren. Dieses Manipulieren kann bitweise geschehen und kann verwendet werden, um die ersten und zweiten Symbole entsprechend der jeweiligen Senderichtung anzupassen.

In einer weiteren bevorzugten Ausführungsform der erfindungsgemäßen Vorrichtung fungiert die Datenverwaltungseinheit als Mastereinheit. Dabei weist die Datenverwaltungseinheit eine erste Master-Schnittstelle auf, die mit einer Slave-Schnittstelle des FBC verbunden ist, und die Datenverwaltungseinheit weist eine zweite Master-Schnittstelle auf, die mit einer Slave-Schnittstelle des LBC verbunden ist. D.h. die Datenverwaltungseinheit steuert den Transferprozess der ersten Symbole zwischen dem FBC und dem LBC, indem die Datenverwaltungseinheit Symbole von dem FBC über die erste Master-Schnittstelle anfordert und die angeforderten Symbole über die zweite Master-Schnittstelle an den LBC transferiert. Dabei weist die Datenverwaltungseinheit eine erste Datentransfereinheit, DTU₀, auf, wobei die DTU₀ angepasst ist, basierend auf ersten Instruktionen über die erste Master-Schnittstelle die ersten Symbole aus einem Buffer des FBC zu lesen und über die zweite Master-Schnittstelle in einen Buffer des LBC zu schreiben. Dabei ist die DTU₀ weiter angepasst, die Gültigkeit der über die zweite Master-Schnittstelle geschriebenen ersten Symbole an den LBC zu senden. Die Gültigkeit wird dabei beispielsweise über ein Steuersignal, einen Kenner, eine Flag, oder einen anderen Code angezeigt. Erst wenn die Gültigkeit angezeigt wird, werden die ersten Symbole von dem LBC auf den Lokalbus gesendet. Wenn keine Gültigkeit festgestellt wird, so können beispielsweise die zuletzt als gültig empfangenen ersten Symbole erneut transferiert und gesendet werden. Alternativ können in diesem Fall aber auch Default-Symbole oder Leer-Symbole gesendet werden, die keine oder eine definierte Steuerung, Regelung usw. an den Datenbusteilnehmern hervorrufen. Dies verhindert, dass fehlerhaft transferierte erste Symbole auf dem Lokalbus gesendet werden, die dort zu fehlerhaften Steuerungen, Regelungen usw. der Datenbusteilnehmer beziehungsweise der damit verbundenen Aktoren führen könnten. Die Datenverwaltungseinheit kann auch eine zweite Datentransfereinheit, DTU₁, aufweisen, die angepasst ist, basierend auf zweiten Instruktionen über die zweite Master-Schnittstelle zweite Symbole aus einem Buffer des LBC zu lesen und über die erste Master-Schnittstelle in einen Buffer des FBC zu schreiben. Die DTU₀ ist dementsprechend angepasst Symbole vom Feldbus in Richtung Lokalbus zu transferieren, wohingegen die DTU₁ angepasst ist Symbole vom Lokalbus in Richtung Feldbus zu transferieren. Die DTUs_{0, 1} sind vorzugsweise hardwaremäßig getrennt voneinander implementiert, so dass eine Trennung zwischen den Transferrichtungen vorhanden ist und die hardwaremäßige Trennung kann eine parallele Verarbeitung in beide Transferrichtungen erlauben, d.h. ein zeitgleicher Transfer in beide Richtungen kann gewährleistet werden. Die DTU₁ kann weiter angepasst sein einen Teil der zweiten Symbole erst dann in den Buffer des FBC zu schreiben, wenn der LBC die Gültigkeit der zweiten Symbole sendet. Dies hat den Vorteil, dass das Senden der zweiten Symbole an die Steuerung über den Feldbus so lange hinausgezögert werden kann, bis die Gültigkeit der zweiten Symbole überprüft ist. Dies ist darin begründet, dass der FBC erst dann die zweiten Symbole aus dem Buffer über den Feldbus sendet, wenn diese komplett sind, also beispielsweise erst dann, wenn der Buffer eine bestimmte Füllung erreicht hat, also zum Beispiel das Feldbustelegramm vollständig ist. Des Weiteren kann die Datenverwaltungseinheit auch angepasst sein zum Transferieren der zweiten Symbole basierend auf einem Steuersignal des LBC. Erst wenn dieses Steuersignal vorliegt werden die zweiten Symbole transferiert.

Die erste und zweite Datentransfereinheit DTU_{0, 1} können auch als Kopiereinheiten bezeichnet werden. Dabei kopiert die DTU₀ Prozessdaten - selektiert aus einem Datenstrom - empfangen über den Feldbus in den Buffer des LBC. Die DTU₁ kopiert Prozessdaten - selektiert aus einem Datenstrom - empfangen über den Lokalbus in den Buffer des FBC. Der FBC und der LBC senden dann jeweils ihren Bufferinhalt auf den Feldbus beziehungsweise den Lokalbus. Der FBC und der LBC arbeiten dabei nicht busneutral, weil diese die entsprechenden Bufferinhalte in ein feldbus- oder lokalbuskonformes Format verpacken. D.h. der FBC und der LBC sind an die jeweiligen Bussysteme angepasst. Diese Einheiten können daher auswechselbar ausgestaltet werden, so dass diese entsprechend der verwendeten Bussysteme gewechselt werden können. Die Kopiereinheiten arbeiten aber busneutral, weil diese nur die Prozessdaten kopieren, ohne dass dabei andere busspezifische Informationen beachtet werden. Die Kopiereinheiten kopieren die ersten und zweiten Prozessdaten dabei aber reihenfolgenabhängig. Dies bedeutet, die Kopiereinheiten kopieren die Prozessdaten der Reihenfolge nach, wie diese den Datenströmen entnommen werden. Dies bedeutet zum Beispiel, dass die ersten Prozessdaten in der Reihenfolge wie diese über den Feldbus empfangenen werden auch in den LBC kopiert werden. In umgekehrter Reihenfolge bedeutet dies, dass die zweiten Prozessdaten in der Reihenfolge wie diese über den Lokalbus empfangen werden in den FBC kopiert werden. Hierbei kann auch gesagt werden, dass die Prozessdaten also ohne deren Reihenfolge zu ändern zwischen der FBC und der LBC durch die Kopiereinheiten kopiert werden.

In einer weiteren bevorzugten Ausführungsform der erfindungsgemäßen Vorrichtung weist die Vorrichtung weiter eine Recheneinheit auf, zum Steuern des FBC und/oder der Datenverwaltungseinheit und/oder des LBC sowie zum Auswerten von den ersten und zweiten Symbolen. Die Recheneinheit kann ein Mikrocontroller sein, der über einen Parallelbus mit dem FBC, dem LBC und/oder der Datenverwaltungseinheit verbunden ist. Beispielsweise kann der Bus ein 32-bit Parallelbus sein. Die Recheneinheit kann angepasst sein, die Instruktionen nach denen der FBC, der LBC, und/oder die Datenverwaltungseinheit arbeitet zu programmieren und zu ändern. Des Weiteren kann die Recheneinheit angepasst sein, Daten über den Feldbus oder aus dem Lokalbus aus der Datenverwaltungseinheit zu empfangen auszulesen und auszuwerten. Weiter kann die Recheneinheit angepasst sein, die von der Datenverwaltungseinheit zwischengespeicherten ersten Symbole, d.h. die zwischengespeicherten Prozessdaten auszulesen und auszuwerten. Auch kann die Recheneinheit angepasst sein, den LBC zu steuern, insbesondere Steuerdaten zur Manipulation der Prozessdaten in den LBC zu schreiben.

In einer weiteren bevorzugten Ausführungsform der erfindungsgemäßen Vorrichtung ist die erste Einheit angepasst die Gültigkeit der über den Feldbus empfangenen Daten zu überprüfen. Die erste Einheit kann auch angepasst sein die Gültigkeit der empfangenen Daten zu signalisieren. Die zweite Einheit kann angepasst sein die Gültigkeit der über den Lokalbus empfangenen Daten zu überprüfen. Die zweite Einheit kann auch angepasst sein die Gültigkeit der empfangenen Daten zu signalisieren. Beispielsweise können Daten nur dann transferiert werden, wenn eine entsprechende Gültigkeit signalisiert wurde. Die Gültigkeit der Datenströme kann beispielsweise anhand von CRC Überprüfungen stattfinden. Dabei können beide oder nur eine Einheit angepasst sein die entsprechende Gültigkeit zu überprüfen. Die erste und die zweite Einheit können angepasst sein, Daten nicht auf den Feldbus bzw. den Lokalbus auszugeben, wenn die Gültigkeit der transferierten Daten oder der empfangenen Daten nicht signalisiert wird von der jeweiligen anderen Einheit. Dabei kann es vorkommen, dass der an der ersten Einheit angeschlossene Feldbus eine kontinuierliche Sendung von Daten verlangt, also das Senden von Daten ohne zeitliche Unterbrechung, in diesem Fall können die zuletzt von der ersten Einheit als gültig erkannten Daten auf dem Feldbus gesendet werden, wenn ansonsten die Gültigkeit der momentanen Daten nicht gegebene ist.

In einer weiteren bevorzugten Ausführungsform der erfindungsgemäßen Vorrichtung weist diese weiter einen Taktgeber und/oder Zeitgeber auf, zur Erzeugung einer internen Zeitgebung und/oder zur Weitergabe an die Datenbusteilnehmer des Lokalbusses. Des Weiteren kann die erfindungsgemäße Vorrichtung eine Synchronisationseinheit aufweisen, zur Synchronisation des Taktgebers und/oder Zeitgebers auf den Takt des Feldbusses. Zum Beispiel kann die Synchronisationseinheit angepasst sein zur Detektion von Transitionen in dem vom Feldbus empfangenen Datenströmen und kann diese zur Regelung der Taktfrequenz des internen Taktsignals nutzen und zur Einstellung einer definierten Phasenlage des internen Taktsignals zu den detektierten Transitionen. Der Zeitgeber der erfindungsgemäßen Vorrichtung kann somit zum Beispiel mit einer von der Steuerung verwendeten Zeitgebung synchronisiert sein. Diese Zeitgebung kann die erfindungsgemäße Vorrichtung auch an die Datenbusteilnehmer des Lokalbusses weitergeben. Diese Zeitgebung kann verwendet werden beim Senden von Teilen des Datenpakets auf dem Lokalbus.

In einer bevorzugten Ausführungsform der erfindungsgemäßen Vorrichtung ist der Feldbus einer aus der Gruppe von ARCNET, AS-Interface, BACNet, BITBUS, ControlNet, Profibus / Profinet, EtherCAT, Ethernet/IP, Interbus, AS-Interface, CIP-Protokolle, CANopen, CC-Link, Modbus, Modbus/TCP, P-NET, Lonworks, SERCOS, BACnet, Bitbus, Measurement Bus, Powerlink, DeviceNet, RTPS, DALI, EIB, FAIS-Bus, FIB-Bus, FlexRAY, HART, KNX, LCN, LIN, LON, P-Net, T-Bus, VARAN. Es ist aber auch denkbar, dass der Feldbus ein anderes Busprotokoll verwendet. Das vom Feldbus verwendete Protokoll muss es nur erlauben, dass die Prozessdaten eindeutig von den nicht-Prozessdaten, also den weiteren im Datenstrom enthaltenen Daten, unterschieden werden können. Hierzu muss beispielsweise durch das Protokoll eindeutig vorgegeben sein, an welcher Position im Datenstrom sich Prozessdaten und an welcher Position sich nicht-Prozessdaten befinden. Alternativ oder zusätzlich muss das Protokoll erlauben, wenn die Prozessdaten nicht immer an der gleichen Position im Datenstrom anzutreffen sind, die Position der Prozessdaten anhand anderer Informationen im Datenstrom zu bestimmen. Die Positionsbestimmung der Prozessdaten im Datenstrom ist notwendig, so dass die Prozessdaten aus dem Datenstrom selektiert werden können.

In einer bevorzugten Ausführungsform der erfindungsgemäßen Vorrichtung ist die erste Einheit als erste Logikschaltung ausgebildet und die zweite Einheit ist als zweite Logikschaltung ausgebildet. Dabei sind die erste und zweite Logikeinheit angepasst voneinander unabhängig betrieben zu werden. D.h. die beiden Logikschaltungen können unterschiedliche Rechenoperationen zeitgleich durchführen. Dies wird bewerkstelligt durch eine getrennte Hardware Implementation der ersten und zweiten Logikschaltung.

In einer weiteren bevorzugten Ausführungsform der erfindungsgemäßen Vorrichtung ist die erste Einheit angepasst einen seriellen Datenstrom vom Feldbus zu empfangen und einen seriellen Datenstrom auf dem Feldbus auszugeben. Die zweite Einheit ist angepasst einen seriellen Datenstrom auf den Lokalbus auszugeben und einen seriellen Datenstrom von dem Lokalbus zu empfangen. Die erste und zweite Einheit sind vorzugsweise angepasst, den seriellen Datenstrom in einen parallelen Datenstrom umzuwandeln. Vorzugsweise sind die erste und zweite Einheit mit der Datenverwaltungseinheit über jeweils einen Parallelbus verbunden . Diese Parallelbusse könne als 32-bit Parallelbus ausgestaltet sein. D.h. innerhalb der erfindungsgemäßen Vorrichtung findet eine parallele Weiterleitung der Symbole der jeweiligen Datenströme statt. Die jeweiligen Parallelbusse können auch Abschnitte eines einzigen Parallelbusses sein.

Die oben genannte Aufgabe wird auch gelöst durch ein Verfahren zum Transferiren von Daten zwischen einem Feldbus und einem Lokalbus, insbesondere einem Ringbus, wobei an den Lokalbus mindestens ein Datenbusteilnehmer angeschlossen ist. Das erfindungsgemäße Verfahren weist auf das Empfangen von Daten über den Feldbus an einer ersten Einheit wobei die empfangenen Daten erste Symbole enthalten, reihenfolgenabhängiges Transferieren der ersten Symbole in eine zweite Einheit und Senden eines Datenpakets auf dem Lokalbus von der zweiten Einheit beinhaltend die ersten Symbole.

### 4. Kurze Beschreibung der Zeichnungen

Die Erfindung wird nachfolgend anhand eines Ausführungsbeispiels mit den beigefügten Zeichnungen näher erläutert. Aus dem beschriebenen Ausführungsbeispiel ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung, einem Feldbus, einem Ausführungsbeispiel der erfindungsgemäßen Vorrichtung sowie einem beispielhaften Ringbus;
- Fig. 2: ein schematisches Blockdiagramm eines Ausführungsbeispiels der erfindungsgemäßen Vorrichtung;
- Fig. 3a: ein schematisches Blockdiagramm eines Ausführungsbeispiels der erfindungsgemäßen Vorrichtung mit transferierten ersten Symbolen vom Feldbus in den Ringbus; und
- Fig. 3b: ein schematisches Blockdiagramm eines Ausführungsbeispiels der erfindungsgemäßen Vorrichtung mit transferierten zweiten Symbolen vom Ringbus in den Feldbus.

### 5. Beschreibung bevorzugter Ausführungsbeispiele

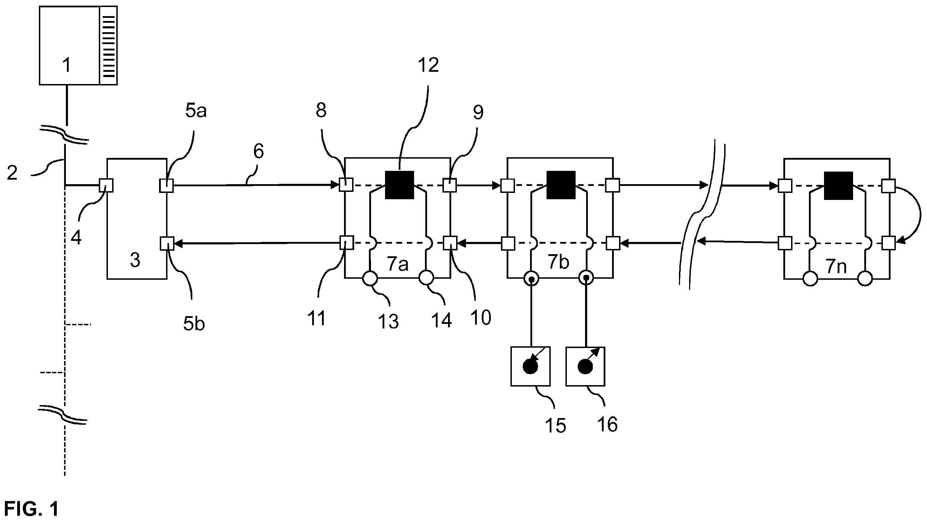

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen.

Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder optische Verbindung herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

Des Weiteren weisen die Datenbusteilnehmer 7a, 7b, ..., 7n in dem in Figur 1 gezeigten Ausführungsbeispiel auch eine Verarbeitungseinheit 12 auf. Diese Verarbeitungseinheit 12 kann eine arithmetische-logische Einheit sein oder eine andere Art von Rechenwerk sein mit dessen Hilfe Daten verarbeitet werden können. Die Verarbeitungseinheit 12 ist vorzugsweise ein integraler Bestandteil des Datenbusteilnehmers 7a, 7b, ..., 7n, um eine besonders schnelle und zeitlich synchronisierte Bearbeitung der Daten sicherzustellen.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher - hier nicht gezeigt - des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, ..., 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation.

Ein Zyklusrahmen kann dabei beispielsweise als ein wiederkehrendes (zyklisches) vorzugsweise äquidistantes Zeitintervall, in dem Daten auf dem Ringbus 6 übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Daten vorgesehen, die innerhalb des Zyklusrahmens in Form von Datenpaketen übertragen werden können. Die Startkennung (SOC) und die Datenpakete werden über den Ringbus 6 übertragen und durchlaufen alle Datenbusteilnehmer 7a, 7b, ..., 7n. Vorteilhafterweise wird der Zyklusrahmen durch den Lokalbusmaster 3 im Ringbus 6 initiiert. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Ringbus 6. Das Signal ermöglicht es den Datenbusteilnehmern 7a, 7b, ..., 7n, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf. Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen.

Das Datenpaket durchläuft dementsprechend einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welches vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Datenpakete in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten bewerkstelligt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden oder vorteilhaft während der laufenden Kommunikation den Datenbusteilnehmern 7a, 7b, ..., 7n zugesandt werden, so dass eine Programmierung der Datenbusteilnehmer 7a, 7b, ..., 7n ohne Unterbrechung der Kommunikation stattfindet.

Welche der Instruktionslisten die Datenbusteilnehmer 7a, 7b, ..., 7n verwenden sollen kann den Datenbusteilnehmern 7a, 7b, ..., 7n anhand von einem Instruktionslistenindex mitgeteilt werden. Dieser Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle (*engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Der Instruktionslistenindex kann vor den zu verarbeitenden Prozessdaten in das Datenpaket eingefügt werden, so dass die Datenbusteilnehmer 7a, 7b, ..., 7n entsprechend der Reihenfolge der Prozessdaten im Datenpaket die entsprechende Instruktionsliste verwenden können. Die Instruktionslisten weisen dabei Instruktionen auf, die an die Reihenfolge der Prozessdaten im Datenpaket angepasst sind. Die Instruktionslisten können dabei beispielsweise für Prozessdaten, die nicht an den Datenbusteilnehmer 7a, 7b, ..., 7n gerichtet sind eine "SKIP" Instruktion aufweisen, also den Datenbusteilnehmer 7a, 7b, ..., 7n anweisen den entsprechenden Teil des Datenpakets zu überspringen, wohingegen die Instruktionsliste für Prozessdaten, die an den Datenbusteilnehmer 7a, 7b, ..., 7n gerichtet sind entsprechende Instruktionen zur verarbeiten der Prozessdaten aufweisen kann. Die Verarbeitung der Prozessdaten kann damit entkoppelt werden von der tatsächlichen Position der Prozessdaten im Datenpaket, da die Datenbusteilnehmer mit Hilfe der Instruktionslisten angepasst werden an die Reihenfolge der Prozessdaten im Datenpaket.

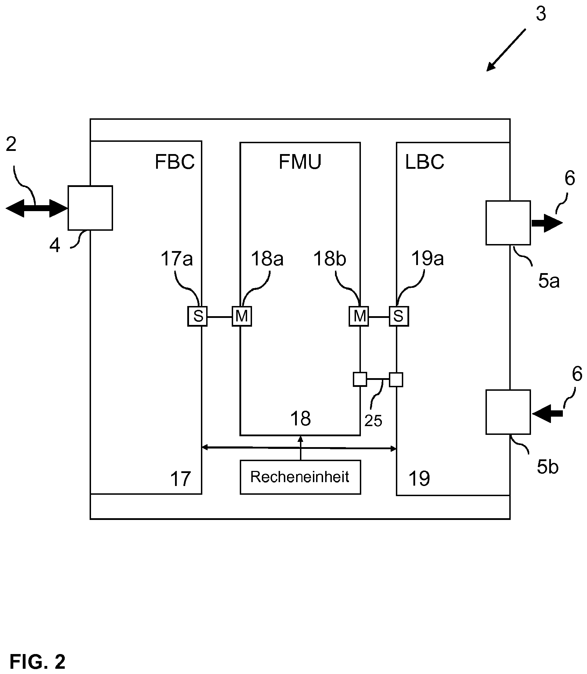

Für die Umsetzung zwischen dem übergeordneten Bus 2, der auch als Feldbus bezeichnet werden kann und dem Ringbus 6 wird in dem hier gezeigten Ausführungsbeispiel der Lokalbusmaster 3 verwendet. Die für die Umsetzung im Lokalbusmaster 3 verantwortliche Vorrichtung ist in Figur 2 gezeigt.

Figur 2 zeigt ein Blockdiagramm eines beispielhaften Ausführungsbeispiels der erfindungsgemäßen Vorrichtung angeordnet im Lokalbusmaster 3. Der Lokalbusmaster 3 ist über die Schnittstelle 4 mit dem Feldbus 2 verbunden und mit der Schnittstelle 5 mit dem Ringbus 6. Die Schnittstelle 4 kann dementsprechend auch als Feldbusschnittstelle bezeichnet werden, wohingegen die Schnittstelle 5 als Lokalbusschnittstelle bezeichnet werden kann. Zur Verarbeitung der über diese Schnittstellen empfangenen Datenströme beziehungsweise zu sendenden Datenströme können an die Schnittstellen 4, 5 Verarbeitungseinheiten angeschlossen sein, dabei kann an der Felbusschnittstelle 4 eine erste Einheit 17 angeschlossen sein, die auch als Feldbuscore (FBC) bezeichnet werden kann und an der Lokalbusschnittstelle 5 kann eine zweite Einheit 19 angeschlossen sein, die auch als Lokalbuscore (LBC) bezeichnet werden kann.

Der FBC 17 und der LBC 19 sind über einen Parallelbus mit einer Datenverwaltungseinheit 18 verbunden. Der Parallelbus kann ein 32-bit Parallelbus sein und an diesen kann auch eine Recheneinheit, beispielsweise ein Mikrocontroller, µC oder ein Prozessor, angeschlossen sein, der in der Lage ist den FBC 17, die Datenverwaltungseinheit 18, und den LBC 19 zu steuern.

Die Datenverwaltungseinheit 18 ist angepasst erste Symbole von dem FBC 17 reihenfolgenabhängig, zum Beispiel in unveränderter Reihenfolge, an den LBC 19 zu transferieren, so dass diese auf den Ringbus 6 über die Lokalbusschnittstelle 5 enhalten in zumindest einem Datenpaket gesendet werden können. Die ersten Symbole können dabei Prozessdaten sein, die über den Feldbus 2 über die Schnittstelle 4 an dem FBC 17 empfangen wurden. Der LBC 19 kann angepasst sein, aufeinander folgende, lokalbuskonforme Datenpakete zur Übertragung der Prozessdaten auf dem Lokalbus 6 zu erzeugen und die von der Datenverwaltungseinheit 18 erhaltenen Prozessdaten in das entsprechende Datenpaket einzufügen. Dabei kann die Reihenfolge der Prozessdaten beibehalten werden, d.h. die Prozessdaten weisen im Datenpaket im Lokalbus die gleiche Reihenfolge auf, wie die Reihenfolge in der die Prozessdaten über die Feldbusschnittstelle 4 an dem FBC 17 empfangen wurden. Mit anderen Worten, über die Feldbusschnittstelle 4 werden an dem FBC 17 Feldbustelegramme des Feldbusses 2 empfangen, die Feldbustelegramme weisen Prozessdaten in Form von ersten Symbolen mit einer festen Anzahl von Bits auf, zum Beispiel 8 Bits, also 1 Byte. Diese ersten Symbole sind in einer ersten Reihenfolge im Feldbustelegramm angeordnet. Die Datenverwaltungseinheit 18 ist angepasst, die Prozessdaten von dem FBC 17 in den LBC 19 zu kopieren. Der LBC 19 ist angepasst ein Datenpaket des Lokalbusses 6 zu erzeugen, wobei in dem Datenpaket die ersten Symbole der Prozessdaten in einer zweiten Reihenfolge enthalten sind und wobei die erste Reihenfolge und die zweite Reihenfolge der Symbole übereinstimmen. Die Datenbusteilnehmer 7a, 7b, ..., 7n sind mittels Instruktionslisten und einem Instruktionslistenindex eingerichtet, die Prozessdaten im Datenpaket auszuwerten. Hierzu ist beispielsweise der Instruktionslistenindex den Prozessdaten im Datenpaket vorangestellt. Umgekehrt ist die Datenverwaltungseinheit 18 angepasst zweite Symbole von dem LBC 19 reihenfolgenabhängig, zum Beispiel unverändert an den FBC 17 zu transferieren, so dass diese auf den Feldbus 2 über die Feldbusschnittstelle 4 gesendet werden können. Dabei sind die zweiten Symbole über die Lokalbusschnittstelle 5 von dem Lokalbus 6 an dem LBC 19 empfangen worden. Wenn es sich bei dem Lokalbus 6 um einen Ringbus handelt, dann ist die Lokalbusschnittstelle 5 in zwei Teile aufgeteilt, nämlich in die Teile 5a und 5b, wobei Daten über den Teil 5a in Abwärtsrichtung auf den Lokalbus 6 gesendet werden und über den Teil 5b in Aufwärtsrichtung vom Lokalbus 6 empfangen werden.

Die Datenverwaltungseinheit 18 weist in dem hier gezeigten Ausführungsbeispiel auch eine erste und zweite Master-Schnittstelle 18a und 18b auf. Die erste Master-Schnittstelle 18a ist dabei verbunden mit einer Slave-Schnittstelle 17a des FBC 17. D.h. die Datenverwaltungseinheit 18 und der FBC 17 stehen in einer Master-Slave Beziehung, in diesem Fall geht die Steuerung also von der Datenverwaltungseinheit 18 aus. Die Datenverwaltungseinheit 18 liest also zu einer von der Datenverwaltungseinheit 18 vorgegebene Zeit Daten von dem FBC 17 beziehungsweise schreibt Daten in den FBC 17. Die zweite Master-Schnittstelle 18b der Datenverwaltungseinheit 18 ist mit einer Slave-Schnittstelle 19a des LBC 19 verbunden. Auch die Datenverwaltungseinheit 18 und der LBC 19 stehen in einer Master-Slave Beziehung. D.h. die Datenverwaltungseinheit 18 beherrscht den Transfer der Daten zwischen dem FBC 17 und dem LBC 19 insbesondere in beiden Richtungen.

Des Weiteren sind die Datenverwaltungseinheit 18 und der LBC 19 in dem hier gezeigten Ausführungsbeispiel über eine weitere Leitung 25 verbunden, über diese weitere Leitung 25 können zwischen der Datenverwaltungseinheit 18 und der LBC 19 Gültigkeitsinformationen bzgl. der transferierten Symbole ausgetauscht werden. Diese Gültigkeitsinformationen können dann verwendet werden, um das Senden der ersten und zweiten Symbole auf den Feldbus 2 beziehungsweise dem Lokalbus 6 hinauszuzögern.

Vorteilhafterweise sind die Verbindungen zwischen den Einheiten als Busse ausgebildet. Dabei kann ein Bus vorteilhafterweise ein 32-bit Parallelbus sein. Die Verbindung kann alternativ auch jede andere Verbindung sein, die den oben beschriebenen Datentransfer zwischen den Einheiten erlaubt.

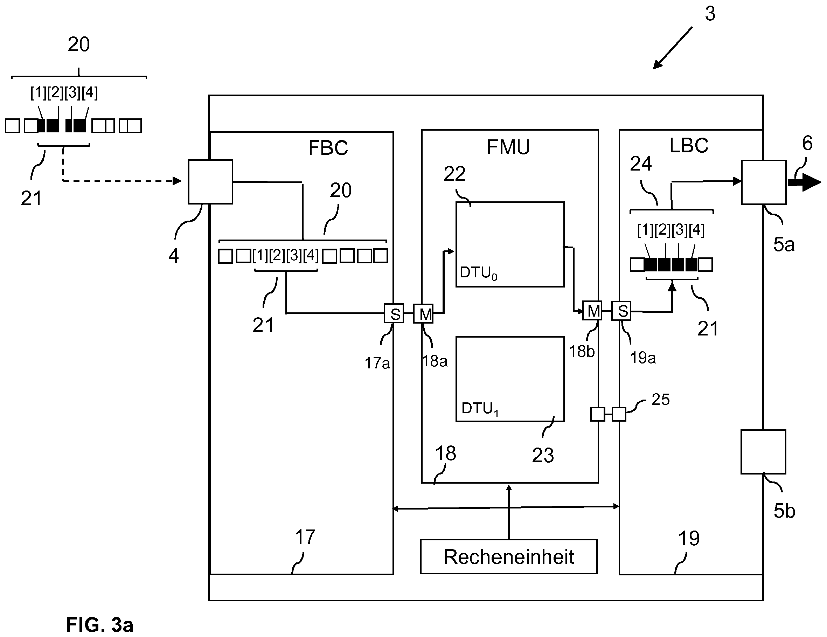

Figur 3a zeigt ein schematisches Blockdiagramm eines Ausführungsbeispiels der erfindungsgemäßen Vorrichtung implementiert in einem Lokalbusmaster 3 eines Ringbusses 6. In dem hier gezeigten Ausführungsbeispiel empfängt die erste Schnittstelle 4 des Lokalbusmasters 3 ein Feldbustelegramm 20 vom Feldbus 2. Dieses Feldbustelegramm 20 enthält exemplarisch 10 Bytes, dargestellt durch eckige Kästchen, wobei jedes Kästchen 1 Byte, also 8 Bits darstellt. Nur die vier schwarz dargestellten Kästchen, die 4 Bytes entsprechen, enthalten erste Prozessdaten 21. Die anderen 6 Bytes des Feldbustelegramms 20 sind Informationen entsprechend des auf dem Feldbus 2 verwendeten Busprotokolls. Diese weiteren 6 Bytes tragen aber keine Prozessdaten 21 die zur Steuerung oder Regelung des Prozesses notwendig sind, diese zusätzlichen Informationen sind nur busspezifische Informationen, wie zum Beispiel Adressierungsinformationen, Prüfsummeninformationen etc. Die ersten Prozessdaten 21 sind hier auch noch gekennzeichnet als [1], [2], [3] und [4], was deren Reihenfolge symbolisiert. Die ersten Prozessdaten 21 werden aus dem Feldbustelegramm 20 von der FBC 17 selektiert und beispielsweise in einem Buffer - hier nicht gezeigt - vorgehalten. Das Selektieren kann darin bestehen, dass der FBC 17 nur die Prozessdaten 21 in einem Buffer überführt, die weiteren Bytes des Feldbustelegramms 20 aber ignoriert.

Die Datenverwaltungseinheit 18 weist in dem hier gezeigten Ausführungsbeispiel eine erste Datentransfereinheit 22 auf, die die Prozessdaten 21 aus dem Buffer des FBC 17 liest über die Master-Slave-Schnittstellenverbindung 17a, 18a und die Prozessdaten 21 dann in einen Buffer - hier nicht gezeigt - des LBC 19 über die Master-Slave-Schnittstellenverbindung 18b, 19a schreibt. D.h. die erste Datentransfereinheit 22 kopiert Prozessdaten 21 von dem FBC 17 in den LBC 19. Das Kopieren kann dabei entsprechend von Instruktionen geschehen und die erste Datentransfereinheit 22 kann angepasst sein den Prozessdaten 21 weitere Daten voranzustellen und/oder anzuhängen und/oder zwischen die Prozessdaten 21 einzufügen. Alternativ oder zusätzlich kann der LBC 19 dazu angepasst sein, den Prozessdaten 21 weitere Daten voranzustellen und/oder anzuhängen und/oder zwischen die Prozessdaten 21 einzufügen und/oder die Prozessdaten 21 zu ändern. Beispielsweise können die weiteren Daten von dem LBC 19 verwendet werden, die Prozessdaten 21 in ein lokalbuskonformes Format zu überführen, beispielsweise in ein Datenpaket, welches auf den Lokalbusses 6 gesendet werden kann. In dem hier gezeigten Ausführungsbeispiel werden den Prozessdaten 21 jeweils ein Symbol vorangestellt und ein Symbol angefügt, zur Erzeugung eines Datenpakets 24, welches die Prozessdaten 21 trägt. Dem Fachmann ist bewusst, dass auch wenn hier nur ein Symbol den Prozessdaten 21 vorangestellt und angefügt wird, auch eine beliebige Anzahl von Symbolen vorangestellt und/oder angefügt werden können und dass sich dies einzig und allein danach richtet, welches Datenpaketformat auf dem Lokalbus 6 verwendet wird. Die erste Datentransfereinheit 22 kann weiter angepasst sein, die Gültigkeit der Prozessdaten 21 dem LBC 19 mitzuteilen und zwar nach dem Kopieren der Prozessdaten 21 in den LBC 19. Dabei kann die Gültigkeit über die Verbindung 25 mitgeteilt werden. Erst wenn der LBC 19 signalisiert bekommt, dass die kopierten Prozessdaten 21 gültig sind, so kann der LBC 19 diese über die Lokalbusschnittstelle 5a in Abwärtsrichtung auf den Lokalbus 6 senden. Die Gültigkeit der Prozessdaten 21 wird dabei beispielsweise anhand einer CRC oder einem Valid-Bit bestimmt.

Dem Fachmann ist klar, dass auch bereits vor der Gültigkeitsanzeige Teile des von dem LBC 19 erzeugten Datenpakets 24 auf den Lokalbus 6 gesendet werden können. Insbesondere, wenn die Teile des Datenpakets 24 die Datenbusteilnehmer 7a, 7b, ..., 7n - wie in Figur 1 gezeigt - sukzessive durchlaufen, d.h. zu jeder gegebenen Zeit vom Lokalbusmaster 3 immer nur ein Teil des Datenpakets 24 gesendet wird, der dann weitergeleitet wird durch die einzelnen Datenbusteilnehmer 7a, 7b, ..., 7n. In diesem Fall kann der LBC 19 bereits vor der Gültigkeitsanzeige den Teil des Datenpakets 24 auf den Lokalbus 6 senden, der die Prozessdaten enthält oder anderweitige Information. In dem hier gezeigten Ausführungsbeispiel kann der LBC 19 also bereits das angefügte eine Symbol als ersten Teil des Datenpakets 24 auf den Lokalbus 6 senden.

Die erste Datentransfereinheit 22 kopiert somit Prozessdaten 21 von dem Feldbus 2 auf den Lokalbus 6. Dabei bleibt bei diesem Kopiervorgang die Reihenfolge [1], [2], [3], [4] der Prozessdaten 21 erhalten, d.h. die Reihenfolge der Prozessdaten 21 ist im Feldbustelegramm 20 sowie im Datenpaket 24 des Lokalbusses 6 die gleiche. Die Prozessdaten 21 werden dabei busneutral kopiert, d.h. ohne die busspezifischen Informationen mit denen die Prozessdaten 21 empfangen werden. In dem hier gezeigten Ausführungsbeispiels werden also die vorangestellten zwei Symbole und die angefügten vier Symbole des Feldbustelegrams 20 nicht kopiert.

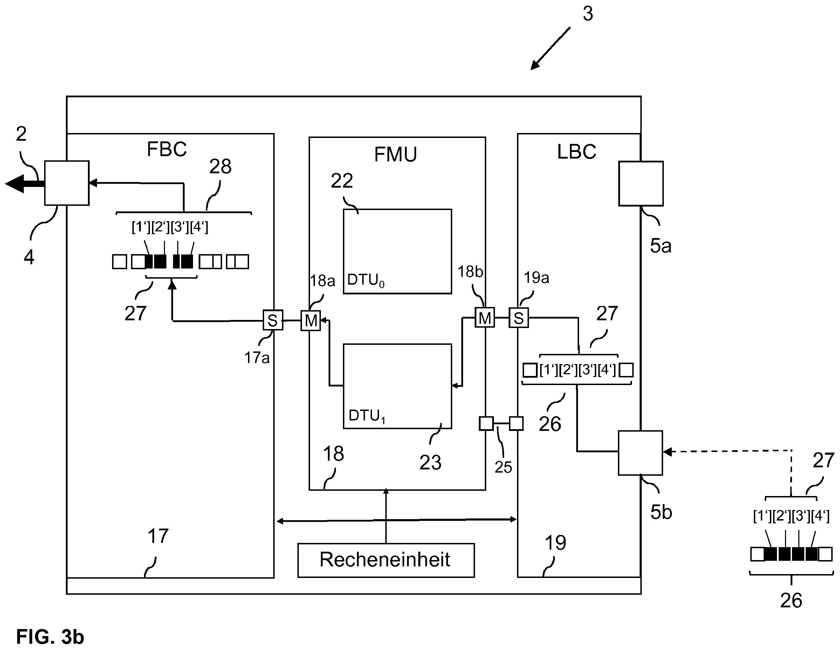

Figur 3b zeigt ein schematisches Blockdiagramm eines Ausführungsbeispiels der erfindungsgemäßen Vorrichtung implementiert in einem Lokalbusmaster 3 eines Ringbusses 6. In dem hier gezeigten Ausführungsbeispiel empfängt die zweite Schnittstelle 5b des Lokalbusmasters 3 ein Datenpaket 26. Das Datenpaket 26 enthält exemplarisch 6 Bytes, dargestellt durch eckige Kästchen, wobei jedes Kästchen 1 Byte, also 8 Bits darstellt. Nur die vier schwarz dargestellten Kästchen, die 4 Bytes entsprechen, enthalten zweite Prozessdaten 27. Die anderen 2 Bytes des Datenpakets 26 sind Informationen entsprechend des auf dem Lokalbus 6 verwendeten Busprotokolls. Die zweiten Prozessdaten 27 sind hier auch noch gekennzeichnet als [1'], [2'], [3'] und [4'], was deren Reihenfolge symbolisiert. Dabei können die zweiten Prozessdaten 27 basieren auf den ersten Prozessdaten 21 - wie in Figur 3a dargestellt - und können die Prozessdaten 21 nach deren Durchlauf, d.h. deren Verarbeitung, durch den Lokalbus 6 darstellen. Die Prozessdaten 27 werden aus dem Datenpaket 26 von dem LBC 19 selektiert und beispielsweise in einem Buffer - hier nicht gezeigt - vorgehalten. Das Selektieren kann darin bestehen, dass der LBC 19 nur die Prozessdaten 27 in einem Buffer überführt, die weiteren Bytes des Datenpakets 26 aber ignoriert.

Die Datenverwaltungseinheit 18 weist in dem hier gezeigten Ausführungsbeispiel eine zweite Datentransfereinheit 23 auf, die die Prozessdaten 27 aus dem Buffer des LBC 19 liest über die Master-Slave-Schnittstellenverbindung 18b, 19a und die Prozessdaten 27 dann in einen Buffer des FBC 17 über die Master-Slave-Schnittstellenverbindung 17a, 18a schreibt. D.h. die zweite Datentransfereinheit 23 kopiert Prozessdaten 27 von dem LBC 19 in den FBC 17. Das Kopieren kann dabei entsprechend von Instruktionen geschehen und die zweite Datentransfereinheit 23 kann angepasst sein den Prozessdaten 27 weitere Daten voranzustellen und/oder anzuhängen und/oder zwischen die Prozessdaten 27 einzufügen und/oder die Prozessdaten zu ändern. Alternativ oder zusätzlich kann der FBC 17 dazu angepasst sein, den Prozessdaten 27 weitere Daten voranzustellen und/oder anzuhängen und/oder zwischen die Prozessdaten 27 einzufügen. Beispielsweise können die weiteren Daten von der FBC 17 verwendet werden, die Prozessdaten 27 in ein feldbuskonformes Format zu überführen, beispielsweise in Fedbustelegramm 28 des Feldbusses 2. In dem hier gezeigten Ausführungsbeispiel werden den Prozessdaten 27 zwei Symbole vorangestellt und vier Symbole angefügt, zur Erzeugung eines Feldbustelegramms 28, welches die Prozessdaten 27 trägt. Dem Fachmann ist bewusst, dass auch wenn hier nur eine spezielle Anzahl an Symbol den Prozessdaten 27 vorangestellt und angefügt werden, dies auch eine beliebige Anzahl von Symbolen sein kann, wobei sich die Anzahl einzig und allein nach dem verwendeten Feldbustelegramformat richtet, welches auf dem Feldbus 2 verwendet wird. Die zweite Datentransfereinheit 23 kann weiter angepasst sein, nur einen Teil der Prozessdaten 27 in den FBC 17 zu kopieren und erst mit Erhalt einer Gültigkeitsanzeige von dem LBC 19 über die Verbindung 25 die restlichen Prozessdaten 27 zu kopieren. Hierdurch kann die zweite Datentransfereinheit 23 den Zeitpunkt steuern, zu welchem das Feldbustelegramm 28 durch den FBC 17 gesendet wird, weil dieses immer direkt dann gesendet wird, wenn das Feldbustelegramm 28 vollständig mit Prozessdaten 27 aufgefüllt ist. Ist dies noch nicht der Fall, so wird auch noch kein Feldbustelegramm 28 gesendet. Dies erlaubt eine Steuerung zwischen der zweiten Datentransfereinheit 23 und dem FBC 17, ohne dass hierfür eine weitere Verbindung nötig ist. Die Gültigkeit der Prozessdaten 27 wird dabei anhand einer CRC bestimmt.

Die in dem beschriebenen Ausführungsbeispiel als separate Einheiten, Module oder Schnittstellen beschriebenen Bauteile der erfindungsgemäßen Vorrichtung können als separate Hardware implementiert sein oder können auf demselben Halbleiterchip integriert sein und deren Funktion kann durch eine Hardware aus Logikgattern implementiert sein. Zum Beispiel können die Einheiten, Module, oder Schnittstellen auf einem FPGA/ASIC implementiert sein.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: erste Abwärtsdatenschnittstelle
- 9: zweite Abwärtsdatenschnittstelle
- 10: erste Aufwärtsdatenschnittstelle
- 11: zweite Aufwärtsdatenschnittstelle
- 12: Verarbeitungseinheit
- 13, 14: Ein-/Ausgänge
- 15: Sensor
- 16: Aktor
- 17: erste Einheit (Feldbuscore, FBC)
- 17a: Slave-Schnittstelle der ersten Einheit
- 18: Datenverwaltungseinheit
- 18a, b: erste und zweite Master-Schnittstelle der Datenverwaltungseinheit
- 19: zweite Einheit (Lokalbuscore, LBC)
- 19a: Slave-Schnittstelle der zweiten Einheit
- 20: empfangenes Feldbustelegramm
- 21: erste Prozessdaten
- 22: erste Datentransfereinheit (DTU₀)
- 23: zweite Datentransfereinheit (DTU₁)
- 24: Datenpaket (Abwärtsrichtung)
- 25: Verbindung zur Gültigkeitsanzeige
- 26: Datenpaket (Aufwärtsrichtung)
- 27: zweite Prozessdaten
- 28: gesendetes Feldbustelegramm

## Patentansprüche

1. Eine Vorrichtung (3) zur Kopplung eines Feldbusses (2) mit einem Lokalbus (6), die Vorrichtung (3) aufweisend:
eine erste Einheit (17), verbindbar mit dem Feldbus (2) und angepasst zum
Senden und Empfangen von Daten in einem feldbuskonformen Format über den Feldbus (2),
wobei die erste Einheit (17) angepasst ist, aus den empfangenen Daten erste Symbole zu selektieren;
eine zweite Einheit (19), verbindbar mit dem Lokalbus (6) und angepasst zum Senden und Empfangen von Daten über den Lokalbus (6) in zumindest einem Datenpaket (24);
eine Datenverwaltungseinheit (18), die mit der ersten Einheit (17) und der zweiten Einheit (19) verbunden ist, wobei die Datenverwaltungseinheit (18) angepasst ist zum reihenfolgenabhängigen Transferieren von nur den von der ersten Einheit (17) selektierten ersten Symbolen (21) in die zweite Einheit (19), wobei die selektierten ersten Symbole (21) nur Prozessdaten sind; und
wobei die zweite Einheit (19) angepasst ist, zumindest das eine Datenpaket (24) beinhaltend die ersten Symbole (21) auf dem Lokalbus (6) zu senden.

2. Die Vorrichtung (3) nach Anspruch 1, wobei die Datenverwaltungseinheit (18) angepasst ist, den ersten Symbolen (21) zusätzliche Symbole voranzustellen und/oder anzufügen.

3. Die Vorrichtung (3) nach einem der vorhergehenden Ansprüche, wobei die Datenverwaltungseinheit (18) angepasst ist, die ersten Symbole (21) zwischen zu speichern.

4. Die Vorrichtung (3) nach einem der vorhergehenden Ansprüche, wobei die zweite Einheit (19) angepasst ist, zum Erzeugen des zumindest einen Datenpakets (24) aufweisend die ersten Symbole (21).

5. Die Vorrichtung (3) nach einem der vorhergehenden Ansprüche, wobei das zumindest eine Datenpaket (24) zweite Symbole (27) enthält.

6. Die Vorrichtung (3) nach Anspruch 5, wobei die zweite Einheit (19) weiter angepasst ist, zum Manipulieren der zweiten Symbole (27).

7. Die Vorrichtung (3) nach einem der vorhergehenden Ansprüche, wobei die zweite Einheit (19) weiter angepasst ist, zum Manipulieren der ersten Symbole (21).

8. Die Vorrichtung (3) nach Anspruch 4, wobei der Lokalbus (6) ein Ringbus ist und wobei Zykluszeiten eines Zyklusrahmens für das zumindest eine Datenpaket (24) angepasst sind an die Zykluszeiten des Feldbusses (2).

9. Die Vorrichtung (3) nach einem der vorhergehenden Ansprüche, wobei die Datenverwaltungseinheit (18) eine erste Master-Schnittstelle (18a) aufweist, die mit einer Slave-Schnittstelle (17a) der ersten Einheit (17) verbunden ist, und/oder wobei
die Datenverwaltungseinheit (18) eine zweite Master-Schnittstelle (18b) aufweist, die mit einer Slave-Schnittstelle (19a) der zweiten Einheit (19) verbunden ist.

10. Die Vorrichtung (3) nach Anspruch 9, wobei die Datenverwaltungseinheit (18) eine erste Datentransfereinheit (22) aufweist, wobei die erste Datentransfereinheit (22) angepasst ist, basierend auf ersten Instruktionen über die erste Master-Schnittstelle (18a) die ersten Symbole (21) aus einem Buffer der ersten Einheit (17) zu lesen und über die zweite Master-Schnittstelle (18b) in einen Buffer der zweiten Einheit (19) zu schreiben.

11. Die Vorrichtung (3) nach Anspruch 10, wobei die Datenverwaltungseinheit (18) angepasst ist, die empfangenen ersten Symbole (21) mittels der ersten Datentransfereinheit (22) über die zweite Master-Schnittstelle (18b) an die zweite Einheit (19) zu senden, wenn eine Gültigkeit der empfangenen ersten Symbole (21) gegeben ist.

12. Die Vorrichtung (3) nach einem der Ansprüche 9 bis 11, wobei die Datenverwaltungseinheit (18) eine zweite Datentransfereinheit (23) aufweist, wobei die zweite Datentransfereinheit (23) angepasst ist, basierend auf zweiten Instruktionen über die zweite Master-Schnittstelle (18b) zweite Symbole (27) aus einem Buffer der zweiten Einheit (19) zu lesen und über die erste Master-Schnittstelle (18a) in einen Buffer der ersten Einheit (17) zu schreiben.

13. Die Vorrichtung (3) nach Anspruch 12, wobei die Datenverwaltungseinheit (18) angepasst ist, die zweiten Symbole (27) mittels der zweiten Datentransfereinheit (23) über die erste Master-Schnittstelle (18a) in den Buffer der ersten Einheit (17) zu schreiben, wenn eine Gültigkeit der zweiten Symbole (27) gegeben ist.

14. Die Vorrichtung (3) nach einem der vorhergehenden Ansprüche, zusätzlich aufweisend:
eine Recheneinheit angepasst zum
Steuern der ersten Einheit (17) und/oder der Datenverwaltungseinheit (18) und/oder der zweiten Einheit (19); und/oder zum Auswerten von den ersten und zweiten Symbolen (21, 27).

15. Die Vorrichtung (3) nach einem der vorhergehenden Ansprüche, wobei die erste Einheit (17) angepasst ist die Gültigkeit der über den Feldbus (2) empfangenen Daten zu überprüfen und die zweite Einheit (19) angepasst ist die Gültigkeit der über den Lokalbus (6) empfangenen Datenpakete zu überprüfen.

16. Die Vorrichtung (3) nach einem der vorhergehenden Ansprüche,
wobei die erste Einheit (17) angepasst ist zum seriellen Senden und Empfangen von Daten über den Feldbus (2);
wobei die zweite Einheit (19) angepasst ist zum seriellen Senden und Empfangen von Daten über den Lokalbus (6);
wobei die Datenverwaltungseinheit (18) mit der ersten Einheit (17) über einen Parallelbus verbunden ist; und
wobei die Datenverwaltungseinheit (18) mit der zweiten Einheit (19) über einen Parallelbus verbunden ist.

17. Die Vorrichtung (3) nach einem der vorhergehenden Ansprüche,
wobei die erste Einheit (17) als erste Logikschaltung zur Kommunikation mit dem Feldbus (2) ausgebildet ist;
wobei die zweite Einheit (19) als zweite Logikschaltung zur Kommunikation mit dem Lokalbus (6) ausgebildet ist; und
wobei die erste Logikschaltung und die zweite Logikschaltung eingerichtet sind, voneinander unabhängige Rechenoperationen auszuführen.

18. Ein Verfahren zum Transferieren von Daten zwischen einem Feldbus (2) und einem Lokalbus (6), wobei an den Lokalbus (6) mindestens ein Datenbusteilnehmer (7a, 7b, ..., 7n) angeschlossen ist, das Verfahren aufweisend:
Empfangen von Daten über den Feldbus (2) an einer ersten Einheit (17), wobei die empfangenen Daten erste Symbole (21) in einem feldbuskonformen Format enthalten;
Selektieren von der ersten Einheit (17) der ersten Symbole (21) aus den empfangenen Daten, wobei die ersten Symbole (21) nur Prozessdaten sind;
reihenfolgenabhängiges Transferieren von nur den ersten Symbolen (21) in eine zweite Einheit (19); und
Senden zumindest eines Datenpakets (24) auf dem Lokalbus (6) von der zweiten Einheit (19) beinhaltend die transferierten ersten Symbole (21).

## Claims

1. An apparatus (3) for coupling a fieldbus (2) to a local bus (6), the apparatus (3) comprising:
a first unit (17), connectable to the fieldbus (2) and adapted to send and receive data in a fieldbus compatible format via the fieldbus (2), wherein the first unit (17) is adapted to select first symbols from the received data;
a second unit (19), connectable to the local bus (6) and adapted to send and receive data via the local bus (6) in at least one data packet (24); and
a data management unit (18) connected to the first unit (17) and the second unit (19), the data management unit (18) being adapted to transfer only the first symbols (21) selected from the received data by the first unit (17) in a sequence-dependent manner to the second unit (19), wherein the first symbols (21) only comprise process data; and
wherein the second unit (19) is adapted to send the one data packet (24) including the first symbols (21) on the local bus (6).

2. The apparatus (3) according to claim 1, wherein the data management unit (18) is adapted to prepend and/or append additional symbols to the first symbols (21).

3. The apparatus (3) according to any of the preceding claims, wherein the data management unit (18) is adapted to temporarily store the first symbols (21).

4. The apparatus (3) according to any of the preceding claims, wherein the second unit (19) is adapted to generate the at least one data packet (24) comprising the first symbols (21).

5. The apparatus (3) according to any of the preceding claims, wherein the at least one data packet (24) comprises second two symbols (27)

6. The apparatus (3) according to claim 5, wherein the second unit (19) is further adapted to manipulate the second symbols (27).

7. The apparatus (3) according to any of the preceding claims, wherein the second unit (19) is further adapted to manipulate the first symbols (21).

8. The apparatus (3) according to claim 4, wherein the local bus (6) is a ringbus and wherein cycle times of a cycle frame for the at least one data packet (24) are adapted to the cycle times of the fieldbus (2).

9. The apparatus (3) according to any of the preceding claims, wherein the data management unit (18) comprises a first master interface (18a) that is connected to a slave interface (17a) of the first unit (17), and/or wherein the data management unit (18) comprises a second master interface (18b) that is connected to a slave interface (19a) of the second unit (19).

10. The apparatus (3) according to claim 9, wherein the data management unit (18) comprises a first data transfer unit (22), and wherein the first data transfer unit (22) is adapted to read the first symbols (21) from a buffer of the first unit (17) via the first master interface (18a) based on first instructions, and write the first symbols (21) into a buffer of the second unit (19) via the second master interface (18b).

11. The apparatus (3) according to claim 10, wherein the data management unit (18) is adapted to send the received first symbols (21) using the first data transfer unit (22) via the second master interface (18b) to the second unit (19), when a validity of the received first symbols (21) is indicated.

12. The apparatus (3) according to any of claims 9 to 11, wherein the data management unit (18) comprises a second data transfer unit (23), and wherein the second data transfer unit (23) is adapted to read second symbols (27) from a buffer of the second unit (19) via the second master interface (18b) based on second instructions, and to write the second symbols (27) into a buffer of the first unit (17) via the first master interface (18a).

13. The apparatus (3) according claims12, wherein the data management unit (18) is adapted to write the second symbols (27) into the buffer of the first unit (17) via the first master interface (18a) using the second data transfer unit (23) when a validity of the second symbols (27) is indicated.

14. The apparatus (3) according to any of the preceding claims, further comprising a computing unit adapted to control the first unit (17) and/or the data management unit (18) and/or the second unit (19) and/or to evaluate the first and second symbols (21, 27).

15. The apparatus (3) according to any of the preceding claims, wherein the first unit (17) is adapted to check the validity of data received via the fieldbus (2), and the second unit (19) is adapted to check the validity of data packets received via the local bus (6).

16. The apparatus (3) according to any of the preceding claims, wherein the first unit (17) is adapted for serially sending and receiving of data via the fieldbus (2), wherein the second unit (19) is adapted for serially sending and receiving of data via the local bus (6),
wherein the data management unit (18) is connected to the first unit (17) via a parallel bus, and
wherein the data management unit (18) is connected to the second unit (19) via a parallel bus.

17. The apparatus (3) according to any of the preceding claims, wherein the first unit (17) is a first logic circuit for communicating with the fieldbus (2);
wherein the second unit (19) is a second logic circuit for communicating with the local bus (6), and
wherein the first logic circuit and the second logic circuit are adapted to perform computational operations independent from one another.

18. A method for transferring data between a fieldbus (2) and a local bus (6),
wherein at least one data bus subscriber (7a, 7b, ..., 7n) is connected to the local bus (6), the method comprising:
receiving data at a first unit (17) via the fieldbus (2), the received data comprising first symbols (21) in a fieldbus compatible format;
selecting, by the first unit (17), the first symbols (21) from the received data, wherein the first symbols (21) comprise only process data;
transferring the first symbols (21) in a sequence dependent manner into a second unit (19); and
sending, by the second unit (19), at least one data packet (24) including the transferred first symbols (21) on the local bus (6).

## Revendications

1. Un dispositif (3) pour le couplage d'un bus de terrain (2) avec un bus local (6), le dispositif (3) incluant :
une première unité (17) reliable au bus de terrain (2) et adaptée pour l'émission et la réception de données dans un format conforme au bus de terrain par l'intermédiaire du bus de terrain (2),
la première unité (17) étant adaptée pour sélectionner des premiers symboles à partir des données reçues ;
une deuxième unité (19) reliable au bus local (6) et adaptée pour l'émission et la réception de données par l'intermédiaire du bus local (6) dans au moins un paquet de données (24) ;
une unité de gestion de données (18) qui est reliée à la première unité (17) et à la deuxième unité (19), l'unité de gestion de données (18) étant adaptée pour le transfert, en fonction de l'ordre, seulement des premiers symboles (21) sélectionnés par la première unité (17) vers la deuxième unité (19), les premiers symboles sélectionnés (21) étant seulement des données de processus ; et
la deuxième unité (19) étant adaptée pour émettre l'au moins un paquet de données (24) contenant les premiers symboles (21) sur le bus local (6).

2. Le dispositif (3) selon la revendication 1, dans lequel l'unité de gestion de données (18) est adaptée pour faire précéder et/ou ajouter des symboles supplémentaires aux premiers symboles (21).

3. Le dispositif (3) selon une des revendications précédentes, dans lequel l'unité de gestion de données (18) est adaptée pour mettre les premiers symboles (21) en mémoire tampon.

4. Le dispositif (3) selon une des revendications précédentes, dans lequel la deuxième unité (19) est adaptée pour générer l'au moins un paquet de données (24) comportant les premiers symboles (21).

5. Le dispositif (3) selon une des revendications précédentes, dans lequel l'au moins un paquet de données (24) contient des deuxièmes symboles (27).

6. Le dispositif (3) selon la revendication 5, dans lequel la deuxième unité (19) est également adaptée pour la manipulation des deuxièmes symboles (27).

7. Le dispositif (3) selon une des revendications précédentes, dans lequel la deuxième unité (19) est également adaptée pour la manipulation des premiers symboles (21).

8. Le dispositif (3) selon la revendication 4, dans lequel le bus local (6) est un bus en anneau, et des temps de cycles d'un cadre cyclique pour l'au moins un paquet de données (24) sont adaptés aux temps de cycles du bus de terrain (2).

9. Le dispositif (3) selon une des revendications précédentes, dans lequel l'unité de gestion de données (18) comporte une première interface maîtresse (18a) qui est reliée à une interface esclave (17a) de la première unité (17),
et/ou
dans lequel l'unité de gestion de données (18) comporte une deuxième interface maîtresse (18b) qui est reliée à une interface esclave (19a) de la deuxième unité (19).

10. Le dispositif (3) selon la revendication 9, dans lequel l'unité de gestion de données (18) comporte une première unité de transfert de données (22), la première unité de transfert de données (22) étant adaptée, sur la base de premières instructions, pour lire par l'intermédiaire de la première interface maîtresse (18a) les premiers symboles (21) à partir d'une mémoire tampon de la première unité (17) et, par l'intermédiaire de la deuxième interface maîtresse (18b), pour les écrire dans une mémoire tampon de la deuxième unité (19) .

11. Le dispositif (3) selon la revendication 10, dans lequel l'unité de gestion de données (18) est adaptée pour émettre les premiers symboles reçus (21) au moyen de la première unité de transfert de données (22) par l'intermédiaire de la deuxième interface maîtresse (18b) vers la deuxième unité (19) s'il y a validité des premiers symboles reçus (21).

12. Le dispositif (3) selon une des revendications 9 à 11, dans lequel l'unité de gestion de données (18) comporte une deuxième unité de transfert de données (23), la deuxième unité de transfert de données (23) étant adaptée, sur la base de deuxièmes instructions, pour lire par l'intermédiaire de la deuxième interface maîtresse (18b) des deuxièmes symboles (27) sur une mémoire tampon de la deuxième unité (19) et, par l'intermédiaire de la première interface maîtresse (18a), pour les écrire dans une mémoire tampon de la première unité (17).

13. Le dispositif (3) selon la revendication 12, dans lequel l'unité de gestion de données (18) est adaptée pour écrire les deuxièmes symboles (27), au moyen de la deuxième unité de transfert de données (23), par l'intermédiaire de la première interface maîtresse (18a) dans la mémoire tampon de la première unité (17) si une validité des deuxièmes symboles (27) est donnée.

14. Le dispositif (3) selon une des revendications précédentes, comprenant en outre :
une unité de calcul adaptée pour
commander la première unité (17) et/ou l'unité de gestion de données (18) et/ou la deuxième unité (19) ; et/ou pour analyser les premiers et deuxièmes symboles (21, 27).

15. Le dispositif (3) selon une des revendications précédentes, dans lequel la première unité (17) est adaptée pour vérifier la validité des données reçues par l'intermédiaire du bus de terrain (2), et la deuxième unité (19) est adaptée pour vérifier la validité des paquets de données reçus par l'intermédiaire du bus local (6).

16. Le dispositif (3) selon une des revendications précédentes,
dans lequel la première unité (17) est adaptée pour l'émission et la réception en série de données par l'intermédiaire du bus de terrain (2) ;
dans lequel la deuxième unité (19) est adaptée pour l'émission et la réception en série de données par l'intermédiaire du bus local (6) ;
dans lequel l'unité de gestion de données (18) est reliée à la première unité (17) par l'intermédiaire d'un bus parallèle ; et
dans lequel l'unité de gestion de données (18) est reliée à la deuxième unité (19) par l'intermédiaire d'un bus parallèle.

17. Le dispositif (3) selon une des revendications précédentes,
dans lequel la première unité (17) est conformée en un premier circuit logique pour la communication avec le bus de terrain (2) ;
dans lequel la deuxième unité (19) est conformée en un deuxième circuit logique pour la communication avec le bus local (6) ; et
dans lequel le premier circuit logique et le deuxième circuit logique sont agencés pour effectuer des opérations de calcul indépendantes les unes des autres.

18. Un procédé pour le transfert de données entre un bus de terrain (2) et un bus local (6), au moins un participant de bus de données (7a, 7b, ..., 7n) étant relié au bus local (6), le procédé comprenant :
la réception de données par l'intermédiaire du bus de terrain (2) au niveau d'une première unité (17), les données reçues contenant des premiers symboles (21) dans un format conforme au bus de terrain ;
la sélection par la première unité (17) des premiers symboles (21) à partir des données reçues, les premiers symboles (21) étant seulement des données de processus ;
le transfert, en fonction de l'ordre, seulement des premiers symboles (21) vers une deuxième unité (19) ; et
l'émission d'au moins un paquet de données (24) sur le bus local (6) par la deuxième unité (19) contenant les premiers symboles (21) transférés.
